# EUROPEAN PATENT APPLICATION

(11) **EP 3 369 584 A1**
(43) Date of publication of application: **05.09.2018**
(21) Application number: 16859835.7
(22) Date of filing: 26.10.2016
(51) Int. Cl.: B41M 5/52, A45D 44/00, B32B 9/00, B41J 2/01, B41M 5/00, B42D 15/00

(54) **PRINTING SHEET, PRINTED PRODUCT, PRINTED PRODUCT WITH MAKE-UP, AND METHOD FOR MANUFACTURING PRINTED PRODUCT WITH MAKE-UP**

(30) Priority: 26.10.2015 JP 2015209638
(71) Applicant: Tokuyama Corporation, Shunan-shi, Yamaguchi-ken 745-8648 (JP)
(72) Inventor: HIRAYAMA, Koki, Shunan-shi Yamaguchi 745-8648 (JP)
(74) Representative: J A Kemp
(86) International application number: PCT/JP2016/081709
(87) International publication number: WO 2017/073605

(57) **Abstract**

A printing sheet that is capable of imparting a feeling of depth and a three-dimensional feeling to a printed image, and is capable of withstanding a strong stress at the time of applying a makeup onto the printed image. The printing sheet comprises a base sheet and an inorganic solid layer provided on the base sheet, a surface of the inorganic solid layer having a scratch hardness of not less than H as measured by the pencil hardness test specified under the JIS K 5600-5-4 and, further, the surface of the inorganic solid layer being a rough surface having an arithmetic mean roughness (Ra) specified under the JIS B 0601-2001 of 4 to 10 *µ*m and a mean length (RSm) of elements specified under the JIS B 0601-2001 of 50 to 150 *µ*m.

## Description

### Technical Field:

This invention relates to a printing sheet, a printed article using the printing sheet and a makeup-applied printed article.

### Background Art:

A widespread use of personal computers and digital cameras in general households has been accompanied by also a widespread use of ink-jet printers that are capable of vividly printing images in full colors assisted by their low costs. As the recording papers for printing by using the ink-jet printers, however, it is not allowable to use ordinary high-quality papers or coated papers due to their properties . The recording papers for printing require such properties that the ink adhered to the paper surface must be quickly absorbed therein, the ink droplets are suppressed from spreading or burring on the surface of the paper, images are vividly formed thereon, and the papers have excellent fastness without permitting the formed images to be discolored over extended periods of time.

To impart above properties to the printing surfaces (paper surfaces), therefore, there has been proposed an art of forming an inorganic solid layer by applying, onto the surface of the paper, a variety of inorganic solid materials together with a binder. For instance, the present applicant has proposed in a patent document 1 a printing sheet comprising a base sheet and a printing layer (inorganic solid layer) that is formed on the surface of the base sheet and contains a plaster in a semi-solidified state.

If an image is printed by using an ink-jet printer on the surface of the printing layer of the printing sheet of the patent document 1, the plaster undergoes the carbonatation after the printing. The plaster is then completely solidified and turns into the calcium carbonate to thereby firmly hold the printed image on the printed surface. The printed image shows up to be a color-fast image producing rugged feeling and deep pictorial impression and, more than that, the ink components forming the image are protected from the ultraviolet rays and ozone. Therefore, the printing sheet of the patent document 1 is very excellent even from the standpoint of long-term preservation of the printed images.

Here, the above-mentioned printing sheet is provided with a removable protection sheet on the surface of the inorganic solid layer that is the printing surface. That is, the removable protection sheet is provided for protecting the surface so that the inorganic solid layer like the printing layer that contains the plaster in a semi-solidified state will not be broken due to the rubbing of the sheets or due to the external pushing force. At the time of printing images, the protection sheet is removed.

In the printing sheet provided with the protection sheet, the surface of the inorganic solid layer is in a semi-solidified state if the protection sheet is not removed. Therefore, if the protection sheet is closely adhered to the surface of the inorganic solid layer and is, thereafter, removed therefrom for printing images, then the surface of the protection sheet is transferred onto the surface of the inorganic solid layer on which the images are to be printed.

As described above, the surface of the protection sheet (surface that closely adheres to the surface of the inorganic solid layer) is transferred and reflected on the surface of the inorganic solid layer. As the protection sheet, therefore, there is favorably used a fiber sheet such as a woven fabric or a nonwoven fabric. If an image is printed on the surface of the inorganic solid layer on which the surface of the fiber sheet has been transferred, the printed image is imparted with a three-dimensional feeling or a feeling of depth due to ruggedness imparted by the fiber.

In connection with the printing sheet provided with the above protection sheet, the present applicant has previously proposed an art about what kind of ruggedness be formed in the surface of the inorganic solid layer upon the removal of the fiber sheet (see a patent document 2). The present applicant has, further, proposed a method of producing a design sheet imparted with a color gamut that could not be obtained by the conventional art of ink-jet printing which consisted of applying a pigment on the inorganic solid layer on which an image has been formed by the ink-jet printing and solidifying the pigment (a patent document 3).

### Prior Art Documents:

### Patent Documents:

Patent document 1: Pamphlet of International Laid-Open No. 2008/013294
Patent document 2: Pamphlet of International Laid-Open No. 2012/165554
Patent document 3: JP-A-2015-167902

### Outline of the Invention:

### Problems that the Invention is to Solve:

As described above, the printing sheet that has the inorganic solid layer with ruggedness in the surface thereof is capable of expressing a printed image with a feeling of depth and a three-dimensional feeling. By utilizing this feature, therefore, there is a demand for applying a makeup on the printed image such as of a photograph of face. However, applying a makeup involves the motion of giving a strong stress to the printing sheet, like beating the makeup materials such as cosmetics by using a sponge.

It is, therefore, an object of the present invention to provide a printing sheet that is capable of imparting a feeling of depth and a three-dimensional feeling to the printed image, and is capable of withstanding a strong stress at the time of applying a makeup onto the printed image.

Another object of the present invention is to provide a printed article that has an image with the feeling of depth and the three-dimensional feeling printed on the printing sheet.

A further object of the present invention is to provide a makeup-applied printed article obtained by properly applying makeup materials onto the image of the above printed article, as well as a method of producing the same.

### Means for Solving the Problems:

According to the present invention, there is provided a printing sheet comprising a base sheet and an inorganic solid layer provided on the base sheet, a surface of the inorganic solid layer having a scratch hardness of not less than H as measured by the pencil hardness test specified under the JIS K 5600-5-4 and, further, the surface of the inorganic solid layer being a rough surface having an arithmetic mean roughness (Ra) specified under the JIS B 0601-2001 of 4 to 10 *µ*m and a mean length (RSm) of elements specified under the JIS B 0601-2001 of 50 to 150 *µ*m.

According to the present invention, further, there are provided:
(1) A printed article having an image printed on the inorganic solid layer of the printing sheet;
(2) A makeup-applied printed article having a makeup layer formed on the image printed on the printed article or, preferably, formed on the ink-jet printed image of a portrait photograph; and
(3) A method of producing a makeup-applied printed article by printing an image or, preferably, ink-jet-printing an image of a portrait photograph on the inorganic solid layer of the printing sheet, and applying a makeup on the printed image by using makeup materials.

### Effects of the Invention:

The printing sheet of the present invention has a suitable degree of hardness and a complex surface shape. Therefore, if, for example, a photograph of face of a person is printed, then the skin of the printed image exhibits a feeling of depth and a three-dimensional feeling, and has ruggedness close to that of a real human skin as seen with the naked eye. Further, even if it is attempted to apply a makeup to the printed image by using cosmetics, the printed article is not damaged; i.e. , the cosmetics are homogeneously applied and adhere well to the surface of the printed image. Therefore, applying the makeup to the printed article of the present invention produces an effect similar to that of applying the makeup to a real person.

By providing a predetermined protection layer on the makeup layer, further, the state of the makeup can be preserved semi-permanently.

By using a known makeup remover, furthermore, it is also allowable to remove the makeup materials from the makeup-applied printed article that is obtained by applying the makeup to the printed article of the invention. It is, further, allowable to apply a makeup again onto the printed article from which the makeup materials have been removed. It is, therefore, possible to demonstrate the printing sheet, the printed article, the makeup-applied printed article and the method of producing a makeup-applied printed article of the present invention at the sales venues of cosmetics.

### Brief Description of the Drawings:

[Fig. 1] It is a view illustrating a sectional structure of a printing sheet of the present invention together with a fiber sheet.
[Fig. 2] It is an electron microphotograph (magnification of 100 times) of the surface of the fiber sheet for transfer.
[Fig. 3] It is a view of a sectional structure of a printed article of the present invention.
[Fig. 4] It is a view of a sectional structure of a makeup-applied printed article of the present invention together with a protection layer.

### Modes for Carrying Out the Invention:

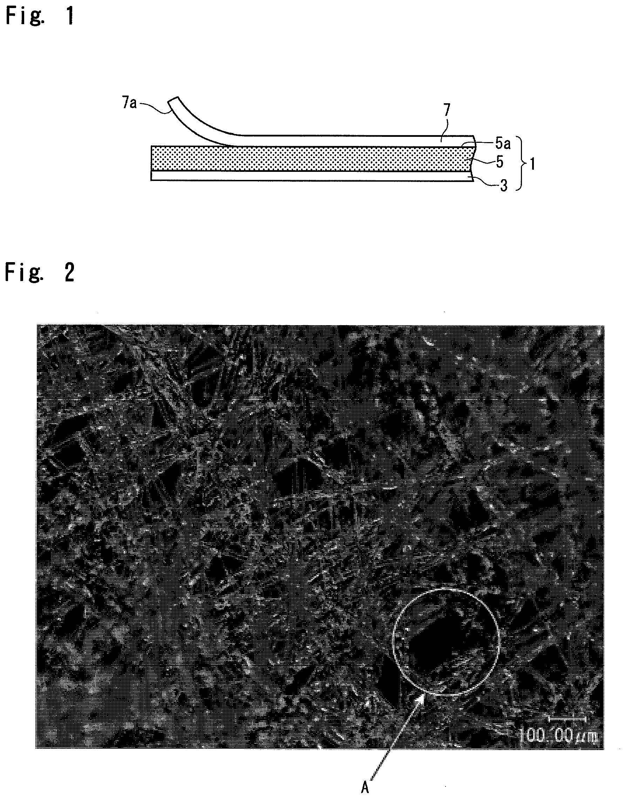

The printing sheet of the invention will now be described with reference to Fig. 1. In the printing sheet of the present invention generally denoted by 1, an inorganic solid layer 5 is formed on the base sheet 3, the surface 5a of the inorganic solid layer being a rough surface satisfying predetermined conditions.

The printing sheet 1 of the present invention is used in a manner of forming an image by, for example, ink-jet printing on the surface of the inorganic solid layer 5. In the specification of this application, the printing sheet having an image formed on the inorganic solid layer is called printed article. Further, the printed article is used upon forming a makeup layer by applying makeup materials on the printed image. In the specification of this application, furthermore, the printed article forming the makeup layer is called makeup-applied printed article. As required, the makeup-applied printed article may be provided with a protection layer.

### <Printing sheet 1>

In the printing sheet 1 of the present invention, the base sheet 3 supporting the inorganic solid layer 5 can be formed by using any material without being specifically limited provided it permits the formation of the inorganic solid layer 5 on the surface thereof by applying a slurry that contains an inorganic powder.

Preferred examples thereof include wood pulp paper, various kinds of resin sheets or resin films such as vinyl resins like polyvinyl alcohol and polyvinyl acetate; acrylic resins like poly(meth)acrylate, etc.; polyolefin resins like polyethylene and polypropylene; and polyester resins like polyethylene terephthalate, etc. Or, the base sheet 3 may be a woven fabric or a nonwoven fabric comprising a fibrous material such as glass fiber, vinylon fiber, polypropylene fiber, polyester fiber, polyethylene terephthalate fiber, acrylic fiber, aramid fiber or carbon fiber. Or, the base sheet 3 may be a laminated film thereof or a laminated sheet thereof.

The base sheet 3, preferably, has flexibility and a suitable degree of stiffness. This is because the base sheet 3 having such properties does not form a folded line despite it is folded, and effectively suppresses such an inconvenience that cracks might develop in the inorganic solid layer 5 formed on the base sheet 3. The material of the above base sheet 3, however, is considerably limited. Usually, however, a pulp paper is preferably used. The pulp paper is available in a general market, has flexibility and bending strength and, besides, favorably adheres to the inorganic solid layer 5. In addition to the pulp paper, there can be used a synthetic paper obtained by mixing the pulp paper with a glass fiber or a chemical fiber such as acrylic fiber, polyester fiber or vinylon fiber as the binder fiber.

The surface of the base sheet 3 maybe treated with a corona discharge to improve hydrophilic property thereof. This helps improve the strength of adhesion between the inorganic solid layer 5 and the base sheet 3.

The base sheet 3 has such an average thickness that enables the printing sheet 1 to easily pass through a printing machine such as an ink-jet printer. Usually, the base sheet 3 has the thickness in a range of 0.02 to 0.5 mm to meet the grade of the printer that is used. Here, the average thickness is measured in compliance with the JIS P 8118.

The printing sheet 1 has the inorganic solid layer 5 that is formed on the base sheet 3. The inorganic solid layer 5 is formed by coating one surface of the base sheet 3 with a kneaded product of an inorganic powder and water, and drying and removing the water from the layer of the kneaded product.

The surface 5a of the inorganic solid layer 5 acquires a scratch hardness of not less than H and, preferably, not less than 2H as measured by the pencil hardness test specified under the JIS K 5600-5-4. This effectively prevents the surface 5a of the inorganic solid layer from being scratched, or prevents the inorganic powder from being removed, by a brush or a sponge that is used at the time of applying the makeup.

It is, further, important that the surface 5a of the inorganic solid layer 5 is a rough surface having an arithmetic mean roughness (Ra) specified under the JIS B 0601-2001 of 4 to 10 *µ*m and a mean length (RSm) of elements specified under the JIS B 0601-2001 of 50 to 150 *µ*m.

The arithmetic mean roughness Ra is found by picking up, over a reference length, a portion of a roughness curve that is measured by using a roughness meter and by expressing the state of ruggedness (amplitude of ruggedness) of that section as a mean value thereof . The smaller the value of the arithmetic mean roughness Ra, the smaller the amplitude of ruggedness. Further, the mean length RSm of elements of the contour curve is found by picking up, over the reference length, the portion of the roughness curve measured by using the roughness meter and by expressing the pitch of the ruggedness of that section. The smaller the value of the mean length RSm, the smaller the pitch of the ruggedness.

In the surface 5a of the inorganic solid layer which is a rough surface having the above-mentioned features, there are a number of fine dents and bumps. The printing ink adheres to the rugged portion and permeates therein making it possible to form a finely printed image without impairing natural texture, such as three-dimensional feeling or feeling of depth. Therefore, if the printed image is a photograph of face of a person, the surface appears to be very close to the human skin. If a makeup is applied to the surface 5a of the inorganic solid layer on which the image has been printed, then the makeup material infiltrates into the surface 5a of the inorganic solid layer and is firmly fixed therein.

As the inorganic powder used for forming the inorganic solid layer 5, there can be exemplified calcium carbonate, alumina, zeolite, calcium silicate, kaolin, clay, titanium oxide, barium sulfate, calcium sulfate, diatomaceous earth, talc, natural mica, synthetic mica, sericite, silicon dioxide, magnesium oxide, magnesium carbonate, aluminum silicate, magnesium silicate, aluminum magnesium silicate, calcium hydroxide, aluminum hydroxide, magnesium hydroxide and barium titanate. From the standpoint of taking a balance between the state of rough surface of the inorganic solid layer and the hardness, however, it is desired to use calcium carbonate, calcium hydroxide, silicon dioxide or alumina. The inorganic powder can be used either alone or as a mixture of two or more kinds thereof.

It is desired that the inorganic solid layer 5 contains a solid component of an emulsion of a polymer as a binder material. The emulsion of a polymer is obtained by dispersing a monomer, an oligomer or a polymer thereof in an aqueous medium. Examples thereof include emulsions of polymers such as acrylic resin, styrene-acrylic resin, vinyl acetate resin, polyurethane and styrene/butadiene rubber. In these cases, the medium (water) evaporates from the emulsion of the polymer in the step of producing the printing sheet 1 of the present invention and, specifically, in the step of drying. Therefore, the polymer component in the emulsion remains in the inorganic solid layer 5 of the printing sheet 1 of the present invention.

The solid component of the polymer emulsion plays a role of improving the binding property and toughness of the inorganic solid layer 5. Further, in the present invention as described already, the surface of the inorganic solid layer has a scratch hardness of not less than H. The scratch hardness increases with an increase in the ratio of the inorganic powder in the inorganic solid layer. That is, if the polymer component remains too much in the inorganic solid layer, then the scratch hardness may not increase to be not less than H. Further, if the solid component of the emulsion (i.e., polymer) is present in an excess amount, then the printed image (printing ink) tends to permeate less into the inorganic solid layer 5. It is, therefore, desired that the amount of the solid component of the polymer emulsion in the inorganic solid layer 5 is, usually, 5 to 50% by weight to secure permeability of the ink and to attain the scratch hardness yet improving toughness and binding property of the inorganic solid layer 5.

The inorganic solid layer 5 may be, further, blended with various additives for adjusting the properties, such as various fiber materials in addition to being blended with the above emulsion. The additives improve properties such as strength and the like of the inorganic solid layer 5 that serves as the printing layer.

Examples of the fiber material include glass fiber, vinylon fiber, polypropylene fiber, polyester fiber, polyethylene terephthalate fiber, acrylic fiber, aramid fiber, carbon fiber, metal fiber and the like fibers.

The fiber may be in the shape of staple yarns, filament yarns, woven fabric or nonwoven fabric. The staple fiber is effective specifically for improving the toughness and cutting workability of the inorganic solid layer 5.

Though there is no specific limitation on the length and diameter of the staple fibers, it is desired that the length is 1 to 10 mm and, specifically, 2 to 6 mm and the diameter is 5 to 50 *µ*m and, specifically, 10 to 30 *µ*m from the standpoint of further improving the toughness of the inorganic solid layer 5 and, depending on the cases, for improving the cutting workability, too.

The inorganic solid layer 5 can be blended with one or two or more kinds of known additives in combination depending upon the object in addition to being blended with the above additives. In any case, the additives should be used in amounts that do not impair the printing ink from permeating into the inorganic solid layer 5 or from being fixed therein. It is desired that the additives are added in such amounts that enable the amount of the inorganic powder to be not less than 50% by weight in the inorganic solid layer 5.

An average thickness of the inorganic solid layer 5 is set to lie in a suitable range which permits images to be printed and, usually, 0.05 to 0.3 mm and, specifically, 0.1 to 0.25 mm. If the thickness of the inorganic solid layer is too small, the image that is printed cannot be fixed well due to the permeation of the printing ink, or the deep feeling of the image expressed by the ruggedness may decrease. If the thickness is too large, on the other hand, it becomes disadvantageous in economy, and limitation is imposed on the printer, such as folded lines easily develop as the printing sheet is folded.

As described already, the surface 5a of the inorganic solid layer is a rough surface having an arithmetic mean roughness (Ra) and a mean length (RSm) of elements that are lying within the above-mentioned numerical ranges. The surface 5a of the inorganic solid layer can be rendered to be the rough surface by, for example, a method by which a kneaded product or a slurry of the inorganic powder and water is applied onto one surface of the base sheet 3 to form a layer of the kneaded product which is then dried, and the surface thereof is polished by using a sand paper or by blasting the sand. Or, as shown in Fig. 1, there also is a method by which a fiber sheet 7 is stuck to the surface of the layer of the kneaded product and is dried. In this state where the fiber sheet remains closely adhered to the inorganic solid layer 5, the printing sheet 1 is delivered to the market or is stored. At the time of printing images, the fiber sheet 7 may be removed.

The inorganic powder used for preparing the slurry for forming the inorganic solid layer should desirably contain fine granules having a mean grain size of, for example, not more than 10 *µ*m and, preferably, not more than 5 *µ*m in an amount of 20 to 80% by weight from the standpoint of easily attaining a desired hardness. The mean grain size is a median diameter (d50) based on the volume as measured by the laser diffraction light scattering method.

It is, further, desired that the slurry is adjusted to acquire a suitable degree of viscosity by being blended with a surfactant that works to homogeneously disperse various blending agents therein and with a tackifier that prevents the kneaded product from dripping when it is applied. The slurry can be applied by using a bar coater, a roll coater, a flow coater, a knife coater, a comma coater, or by spraying, dipping, ejection or by transferring a mold material. As required, furthermore, there can be employed a trowel presser, a cap aperture, roller compacting or a monoaxial press.

The slurry is applied in such a thickness that the inorganic solid layer 5 assumes the above-mentioned thickness after it is dried. The slurry after having been applied is dried to such an extent that the water content in the inorganic solid layer 5 is not more than 5% and, specifically, about 0.1 to about 2.0%. If the water content is too large, the layer cannot maintain its form. If an image is printed in a state where the water content is large, further, the ink may easily blur. The slurry after applied is dried by being heating at 40 to 150°C by blowing the hot air. If the heating temperature is too high, then the base sheet 3 and the fiber sheet 7 could be deformed by heat.

If the surface is roughened by using the fiber sheet 7, i.e., by sticking the fiber sheet 7 to the surface of the inorganic solid layer as shown in Fig. 1, the surface portion of the inorganic solid layer infiltrates into the fiber sheet 7 through the transfer surface 7a thereof. Thereafter, if the fiber sheet 7 is removed, the surface portion is split off or is destroyed together with the fiber sheet 7. Therefore, the transfer surface 7a of the fiber sheet is transferred onto the surface 5a of the inorganic solid layer 5 which, therefore, acquires a rough surface as desired.

The fiber sheet 7, further, works as a protection sheet for protecting the surface of the inorganic solid layer 5. Namely, in the invention, the surface of the inorganic solid layer has a scratch hardness of not less than H, i.e., has a high degree of durability against the external stress. Still, there remains a probability that the inorganic solid layer may be scratched due to some causes during the transit or during the storage. With the fiber sheet 7 being provided just after the production of the printing sheet 1 until just before it is used for being printed, however, the above inconvenience can be effectively prevented.

In the invention, the surface 5a of the inorganic solid layer is rugged or, concretely, has an arithmetic mean roughness (Ra) of 4 to 10 *µ*m and a mean length (RSm) of elements of 50 to 150 *µ*m. It is, therefore, necessary to use the fiber sheet 7 that has a specific surface state so that when the fiber sheet 7 is removed, the transfer surface 7a of the fiber sheet is transferred onto the surface 5a of the inorganic solid layer and, therefore, that the surface 5a of the inorganic solid layer acquires the surface state as described above.

As the fiber sheet 7, therefore, there is used the one that has dents formed in the surface thereof as described later. Specifically, there is used a nonwoven fabric sheet comprising a thermally melt-adhering fiber enabling the dents to be transferred through a press-adhering treatment using a hot roll.

Concretely, there is employed the fiber sheet 7 having flat portions at a ratio of 65 to 90% per a unit area in the transfer surface 7a and having dents A of long diameters of 10 to 300 *µ*m in a number of 50 to 250 dents/mm² being surrounded by the flat surfaces.

That is, as observed on an electron microphotograph of a magnification of 100 times as shown in Fig. 2, the transfer surface 7a of the fiber sheet used in the present invention contains a continuous flat surface and amorphous dents surrounded by the flat surface. In Fig. 2, a black region surrounded by a circle is observed as an amorphous dent A (i.e., gap between the filaments), and a portion of a high contrast surrounding the dent A is the flat surface.

The fact that the fiber sheet 7 has the above transfer surface 7a is important from the standpoint of printing, on the surface 5a of the inorganic solid layer, an image on which a makeup can be applied excellently. That is, upon laminating the transfer surface 7a of the fiber sheet on the surface 5a of the inorganic solid layer in a manner of closely adhered thereto, the inorganic solid material in the surface portion of the inorganic solid layer 5 infiltrates into the amorphous dents A in the transfer surface 7a. Therefore, when the fiber sheet 7 is removed, the portions that have entered in the dents A in the transfer surface 7a are broken. As a result, amorphous bumps corresponding to the amorphous dents A are formed on the surface 5a of the inorganic solid layer.

Since there are formed amorphous dents A of the above-mentioned sizes in a predetermined number in the transfer surface 7a, there are transformed amorphous bumps of predetermined sizes corresponding thereto on the surface 5a of the inorganic solid layer. As a result, due to the presence of such amorphous bumps, the image printed on the surface 5a of the inorganic solid layer is accompanied by a three-dimensional feeling, a feeling of depth and delicacy. For instance, when a photograph (specifically, the face) of a person is printed, the surface thereof appears to be very close to the human skin and the printed image permits a makeup to be applied thereon excellently.

To form the amorphous dents of the above-mentioned sizes at a predetermined ratio, it is necessary to use, as the fiber sheet, a nonwoven fabric sheet that comprises a thermally melt-adhering fiber, the nonwoven fabric sheet having been subjected to the press-adhering treatment by using a hot roll. That is, the surface of the fiber is made flat through the press-adhesion by using the hot roll, and dents A can be clearly made present therein.

Here, if the woven fabric sheet is thermally melt-adhered instead of thermally melt-adhering the nonwoven fabric sheet, then the transfer surface 7a becomes flat and it becomes difficult to make the surface 5a of the inorganic solid layer rugged. Even if dents could be clearly made present, the fiber has been regularly woven and, therefore, dents of a predetermined shape are regularly arranged. Accordingly, the image printed on the surface 5a of the inorganic solid layer appears to be considerably different from, for example, the human skin making it, therefore, difficult to apply a makeup thereon.

Moreover, despite the nonwoven fabric sheet that has not been thermally melt-adhered is used, the fiber partly remains adhered to the surface 5a of the inorganic solid layer when the fiber sheet is removed spoiling, therefore, the adaptability for printing. Besides, the surface of the fiber has not been crushed by heat and, therefore, dents A cannot be clearly made present. Accordingly, bumps transferred onto the surface 5a of the inorganic solid layer lose stability and it becomes impossible to form a printing surface on which images can be delicately printed maintaining stability.

It is, further, desired that the above nonwoven fabric sheet comprises a thermally melt-adhering core-sheath fiber (a high-melting fiber as a core and a low-melting fiber as a sheath) . For example, there can be preferably used a nonwoven fabric sheet comprising a commercially available core-sheath fiber using a polypropylene as the core material and a polyethylene as the sheath. By using the nonwoven fabric comprising the above core-sheath fiber, it is made possible, through the press-adhering treatment using the hot roller, to melt the low-melting fiber of the sheath portion without, however, melting the core potion, to melt-adhere the fibers and, at the same time, to flatten the fibers, and to form the above-mentioned flat portions and the amorphous dents A (i.e., gaps among the fibers).

The press-adhesion using the hot roll is carried out by adjusting the temperature, time and rolling pressure so that the gaps among the fibers that become the dents will not be crushed. When the nonwoven fabric of the above core-sheath fiber is used, for instance, it is desired that the press-adhering treatment is carried out at a temperature which is not lower than a melting point of the low-melting fiber that serves as the sheath but is lower than a melting point of the high-melting fiber that serves as the core. In the case of the nonwoven fabric sheet of the core-sheath fiber using the polypropylene as the core material and the polyethylene as the sheath, for example, the press-adhering treatment is carried out at, desirably, 90 to 150°C.

Further, the fiber that constitutes the nonwoven fabric and the weight per unit area thereof are so selected that the flat portions and the dents A of predetermined sizes are formed at ratios as described above. It is desired that the above-mentioned core-sheath fiber (polypropylene fiber/polyethylene fiber) comprises filament yarns of a filament diameter of 10 to 50 *µ*m in a weight of 30 to 120 g/m². This enables the fiber sheet 7 to remain closely adhered to the surface 5a of the inorganic solid layer maintaining a suitable degree of strength against the removal while stably exhibiting an effect of transfer and an effect of protection.

As the fiber sheet 7 as described above, use is made of the unwoven fabric sheet having the transfer surface 7a that satisfies predetermined conditions, the nonwoven fabric sheet having been subjected to the press-adhering treatment using the hot roll. The fiber sheet 7 is closely adhered to the surface 5a of the inorganic solid layer. At the time of printing images, the fiber sheet 7 is removed. Namely, the surface 5a of the inorganic solid layer turns out to be a surface having excellent printability enabling images to be printed thereon on which makeups can be favorably applied.

The surface 5a of the inorganic solid layer thus obtained is a rough surface having a scratch hardness of not less than H, an arithmetic mean roughness (Ra) of 4 to 10 *µ*m and a mean length (RSm) of elements of 50 to 150 *µ*m. According to the present invention, therefore, images can be printed on the surface 5a of the inorganic solid layer, the images permitting makeups to be applied thereon favorably.

### <Printed article 10>

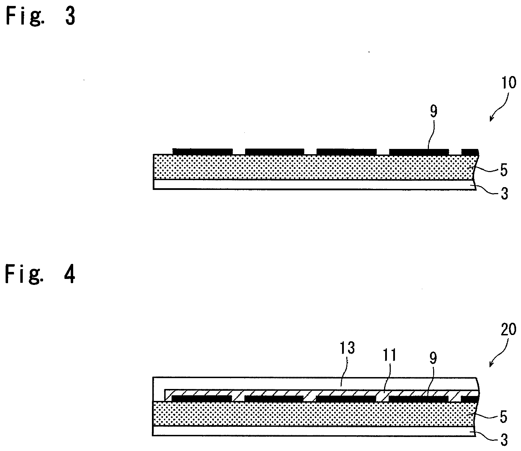

Referring to Fig. 1 as well as to Fig. 3, a printed article 10 can be formed by printing an image 9 on the surface 5a of the inorganic solid layer of the printing sheet by using an ink-jet printer or the like printer and by using an ink in which a predetermined pigment or a dye has been dispersed or dissolved.

The ink, most preferably, is a hydrophilic ink obtained by dissolving a water-soluble dye or by dispersing a pigment in the water (or in a mixed solvent of water and alcohol) by using a surfactant. Upon using the hydrophilic ink, the image 9 can be formed vividly on the inorganic solid layer 5 without blurring and maintaining stability. The present invention, particularly preferably, uses an ink that uses a pigment.

In the invention, dents and bumps have been formed in many numbers in the surface 5a of the inorganic solid layer. Therefore, when a portrait photograph and, specifically, a photograph of face is printed thereon, the surface of the printed image 9 appears to be close to the human skin with three-dimensional feeling, which is the most suited to be applied with makeup materials that will be described later.

### <Makeup-applied printed article 20>

Referring to Fig. 3 as well as to Fig. 4, the printed article 10 can be used with a makeup being applied to the printed image 9. Concretely speaking, a makeup-applied article 20 is obtained by forming a makeup layer 11 on the image 9 that is printed on the article, or is obtained by forming a protection layer (not shown) that will be described later on the printed image 9, and by applying a makeup material on the protection layer to form the makeup layer. In the present invention, the printed image such as the photograph of face has a suitable degree of ruggedness and appears to be close to a real face. By applying a makeup onto the above printed image by using, for example, general cosmetics, therefore, the image appears to be very little different from the real face on which the makeup is applied. When an image is printed on a flat surface like that of an ordinary photograph, the printed image gives an impression that is different from the real one. Therefore, a makeup applied thereon appears to be different from the real makeup. Moreover, the ordinary photographs are accompanied by such a defect that the cosmetics used for the makeup become blurred.

As will be understood from the above description, preferably, the image 9 printed by the present invention is a human figure (specifically, a photograph of face) that is shot by using a digital camera or the like and is printed by the ink-jet or the like method. The makeup materials that are used are, in many cases, cosmetics.

The cosmetics may be the known ones in the form of, for example, powders, liquids or pastes. Concretely, there can be suitably used eye blower, eye liner, mascara, lipstick, lip liner, eye shadow, foundation, cosmetic base, face powder, cheek, highlight (highlighting powder), concealer, lip gloss and the like depending on the form of the printed image 9.

When the image to be printed is a photograph of hand, a known ultraviolet ray-curable transparent resin is applied and cured in advance on the nail portions, and a manicure is applied onto the resin to make sure if the color of the manicure meets the color of the skin or the texture thereof.

The makeup material is applied onto the printed image 9 directly by hand, or by using a brush, a writing brush, a dewaxed cotton or a fabric in a manner depending on the kind thereof.

The makeup layer 11 can be removed by using a solvent such as cleansing agent. When the cosmetics are used as the makeup materials, the cleansing agent will be a known cosmetic remover such as cleansing oil, cleansing milk, cleansing cream or cleansing gel. Further, when a manicure is used as the makeup material, a known manicure remover may be used. The printed article after it has been cleansed can be provided again with the makeup layer 11 by applying the makeup thereon.

In the foregoing was described the cosmetics as the makeup materials. When the printed image 9 is not a portrait photograph, however, a liquid in which a pigment is dispersed may be applied onto the printed image 9 and may be suitably dried to thereby form the makeup layer 11. Particularly, the images that are ink-jet-printed are not capable of expressing luster. In this case, therefore, the makeup layer 11 is formed by using a pearl-like pigment obtained by coating, for example, mica or isinglass with titanium oxide. For the images other than the human figure, too, the makeup layer 11 can also be formed to impart metallic luster and to improve decorative appearance of the printed image 9.

The makeup-applied printed article of the present invention may be, further, provided with a protection layer. Concretely speaking, as shown in Fig. 4, a protection layer 13 can be provided on the makeup layer 11 to improve preservability thereof. Specifically, when the makeup-applied printed article of the present invention is to be preserved for extended periods of time or permanently, it is desired to form the protection layer 13.

Depending on the cases, it is also allowable to form the protection layer on the printed image 9 and form the makeup layer 11 on the protection layer. This method is effective in reliably preventing the printed image 9 from blurring when the makeup layer 11 is formed.

The protection layer 13 is formed by using a transparent resin which is not soluble in water. For example, a resin solution is obtained by dissolving an acrylic resin, an urethane resin, a vinyl chloride resin or the like in a solvent such as methanol, ethanol, propanol, butanol, dimethylformamide, methyl ethyl ketone, toluene, cyclohexane, butyl acetate or the like. The resin solution is then applied by spraying or the like onto the makeup layer 11 and is dried to thereby easily form the protection layer 13. The protection layer 13 then enters into the dents in the makeup layer 11 to firmly hold the makeup layer 11.

When the protection layer is to be formed on the printed image, it is desired that the protection layer is formed by using a resin which is insoluble in water. This is to prevent the makeup material from dissolving in water in the cleansing material when the makeup material is to be wiped out by using the cleansing material.

### <Use>

Upon providing the printed images 9 with the makeup layer and the protection layer, the printed article of the present invention can be preserved permanently or for extended periods of time. Here, the printed images 9 appear to be very close to natural images . By utilizing the means of forming the makeup layer 11, therefore, the printed article can be favorably used for a makeup campaign in a venue of, for example, selling cosmetics while at the same time offering advices on how to put makeups while boosting the sales of cosmetics. That is, the face of a customer is photographed and is printed by using, for example, an ink-jet printer on the inorganic solid layer 5 of the printing sheet 1 to form the image 9 of the face thereon. Then a makeup material is applied thereon on the site to form the makeup layer 11. The customer, therefore, can make sure the effect of makeup on the makeup-applied printed article.

It is, further, allowable to, first, print a photograph of the face of a model on the printing sheet of the present invention. Thereafter, a makeup is applied thereon to form a makeup-applied printed article which is then displayed in a display window of a shop. An advertisement of a product or cosmetic can be thus created by a unique method that did not exist thus far.

The above-mentioned printed article and use of the makeup-applied printed article have not been quite known so far.

### EXAMPLES

Excellent effects of the invention will now be described by way of the following Examples. Described below are testing methods and the materials used in the Examples and Comparative Examples.

### (1) Roughness of the surface of the inorganic solid layer.

A surface roughness measuring machine (Model SV-3000CNC, manufactured by Mitsutoyo Co.) was used to measure an arithmetic mean roughness (Ra) specified under the JIS B 0601-2001 and to measure a mean length (RSm) of elements specified under the JIS B 0601-2001.

### (2) Scratch hardness on the surface of the inorganic solid layer.

An electric pencil scratch hardness tester (Model No. 553-M1, manufactured by YASUDA SEIKI SEISAKUSHO, LTD.) was used to execute the pencil hardness test specified under the JIS K 5600-5-4 in order to measure a scratch hardness.

### (3) Method of measuring the quantity of dents in the fiber sheet.

By using an electron microscope (Model Qanta 200, Genesis 2000, manufactured by EFI Co.), the image of the surface of a fiber sheet was photographed as a digital image being magnified by 100 times. By using an image processing software (Popimaging 4.00, manufactured by Digital Viewing Kids Ltd.), the obtained digital image data were subjected to the binarization based on the discriminant analysis method to clearly discriminate the dent portions and the bumping portions. By using an image measuring function of the same image processing software, furthermore, the total number of the dents per a unit area and an area ratio thereof were measured.

### (4) Printing.

By using an ink-jet printer (trade name: PX-5V, manufactured by Seiko Epson Co., using an aqueous ink in which a pigment is dispersed), the photograph of face of a woman was printed in a real size on the printing sheets prepared in Examples of before the printing and in Comparative Examples of before the printing (in Comparative Examples 1 and 2 of before the printing, the ink-jet-printing papers were prepared) . The printing sheets were dried at room temperature for 5 hours, and there were prepared the printed articles having an image printed thereon.

### (5) Makeup properties.

Onto the printed articles having the ink-jet-printed image, a makeup artist applied a makeup using the following makeup materials to obtain the makeup-applied printed articles. The makeup-applied printed articles that were obtained were compared with the real human skin on which the same makeup was applied, and were evaluated.

### [Makeup materials]

Foundation: Powder foundation of Shiseido Co., Ltd. (Part No. ochre 10, powder type)
Eye shadow: Luminizing satin eye color trio of Shiseido Co., Ltd. (Part No. BL310)
Rouge: Rouge of Shiseido Co., Ltd. (Part No. RD308)

### [Evaluation basis]

Excellent: Very close to the human skin.
Good: Fairly close to the human skin.
Acceptable: Slightly different from the human skin.
Not acceptable: Very different from the human skin.

### (6) Cleansing properties.

There were provided the makeup-applied printed articles that were prepared for evaluating the makeup properties in (5) above. By using a cleansing agent {Make Cleansing Lotion N (lotion type) produced by Shiseido Co., Ltd.}, the foundation was wiped out and was evaluated on the following basis.

### [Evaluation basis]

Good: The foundation could be completely removed.
Acceptable: The foundation remained locally.
Not acceptable: The foundation remained by not less than a half.

(A) Base sheet.
   Pulp paper: Ink-jet stencil paper (trade name: FK Slat R-IJ) (average thickness; 0.17 mm, weight, 160 g/m²) produced by Fuji-Kyowa Seishi Co.
(B) Inorganic powder.
   Calcium hydroxide: High-purity slaked lime CH (trade name), produced by Ube Materials Industries, Ltd.
   Alumina: Boehmite C06 (trade name), produced by Taimei Chemicals Co., Ltd.
(C) Aqueous acrylic resin emulsion.
   Polytron: Polytron A 1480 (trade name), produced by Asahi Kasei Kogyo Co. (acrylic copolymerized latex, solid component; 40% by weight)
(D) Nonwoven fabric.
   Nonwoven fabric A: Nonwoven fabric (filament diameter; 0.02 mm, average thickness; 0.12 mm, weight; 60 g/m²) of a core (polypropylene)/sheath (polyethylene) fiber, produced by SHINWA Co., Ltd.

### (Examples 1 and 2 of before the printing)

The nonwoven fabric A was treated with a hot calender under the conditions of heating temperatures shown in Table 1, a treating speed of 30 m/min, and a linear pressure of 100 N/mm to obtain fiber sheets 1 and 2 shown in Table 1. The total numbers of dents in the fiber sheets per a unit area and area ratios thereof were measured by the method described in (3) above. The results were as shown in Table 1.

Next, 100 parts by weight of the slaked lime, 60 parts by weight of the aqueous acrylic resin emulsion and 20 parts by weight of the water were kneaded together to obtain a slaked lime slurry. A pulp paper (300 x 300 mm) was used as the base sheet. By using a bar coater, the above slaked lime slurry was applied onto the surface of the base sheet and, immediately thereafter, the fiber sheets 1 and 2 were press-adhered onto the surface of the slurry followed by drying in a drier maintained at 90°C for 10 minutes. The fiber sheets 1 and 2 were removed, and there were obtained the printing sheets 1 and 2. After the fiber sheets 1 and 2 were removed, no fiber remained adhered on the surfaces of the inorganic solid layers. The printing sheets 1 and 2 were measured for their arithmetic mean roughness (Ra) on the surfaces of the inorganic solid layers, mean lengths (RSm) of elements, and scratch hardness by the methods described in (1) and (2) above. The results were as shown in Table 2.

### (Examples 3 and 4 of before the printing)

Fiber sheets 3 and 4 were obtained in the same manner as in Examples 1 and 2 of before the printing but heating them at temperatures shown in Table 1. The total numbers of dents in the fiber sheets per a unit area and area ratios thereof were measured by the method described in (3) above . The results were as shown in Table 1.

Next, 50 parts by weight of the alumina, 50 parts by weight of the aqueous acrylic resin emulsion and 20 parts by weight of the water were kneaded together to obtain an alumina slurry. Printing sheets 3 and 4 were obtained in the same manner as in Examples 1 and 2 of before the printing but using the alumina slurry instead of the slaked lime slurry and using the fiber sheets 3 and 4 instead of the fiber sheets 1 and 2. After the fiber sheets 3 and 4 were removed, no fiber remained adhered on the surfaces of the inorganic solid layers. The printing sheets 3 and 4 were measured for their arithmetic mean roughness (Ra) on the surfaces of the inorganic solid layers, mean lengths (RSm) of elements, and scratch hardness by the methods described in (1) and (2) above. The results were as shown in Table 2.

**Table 1**

| Examples of before the printing | Fiber sheet | Nonwoven fabric | Heating temperature (°C) | Mean thickness (mm) | Total number of dents per mm² | Area ratio of dents (%) |
|---|---|---|---|---|---|---|
| 1 | 1 | A | 125 | 0.11 | 140 | 25 |
| 2 | 2 | A | 135 | 0.10 | 120 | 18 |
| 3 | 3 | A | 120 | 0.07 | 150 | 33 |
| 4 | 4 | A | 130 | 0.07 | 130 | 24 |

**Table 2**

| Examples of before the printing | Printing sheet | Fiber sheet | Thickness of inorganic solid layer (mm) | Arithmetic mean roughness Ra (µm) | Mean length of elements RSm (µm) | Scratch hardness | Residual fiber |
|---|---|---|---|---|---|---|---|
| 1 | 1 | 1 | 0.12 | 8.3 | 125 | 2H | no |
| 2 | 2 | 2 | 0.12 | 5.9 | 82 | 2H | no |
| 3 | 3 | 3 | 0.14 | 6.3 | 102 | 1H | no |
| 4 | 4 | 4 | 0.15 | 5.1 | 70 | 1H | no |

### (Examples 1 to 4 of after the printing)

Printed articles 1 to 4 were obtained by printing an image by the method describe in (4) above on the surfaces of the inorganic solid layers of the printing sheets 1 to 4 obtained in Examples 1 to 4 of before the printing. In the printed articles 1 and 2 using the printing sheets 1 and 2 after drying, the calcium hydroxide had been completely carbonatated in the inorganic solid layers.

A makeup was applied onto the above printed articles 1 to 4 by the method described in (5) above, and makeup properties were evaluated. Further, the foundation was removed by the method described in (6) above, and the cleansing properties were evaluated. The results were as shown in Table 6. Hereinafter, the printed articles 1 to 4 after cleansed and from which the foundation has been removed but which still wear eyeshadows and rouges, are called makeup-applied printed articles 1' to 4'.

A water-insoluble resin solution obtained by dissolving an acrylic resin (S-LEC BM-1, produced by Sekisui Chemicals Co., Ltd.) in isopropanol (IPA) and adjusting the concentration thereof to be 6% by weight, was spray-applied onto the images printed on the makeup-applied printed articles 1' to 4' and was dried at room temperature for 2 hours. Thereafter, the makeup materials (rouge and eyeshadow) were wiped out by using the cleansing agent. The makeup materials remained firmly adhered thereto just like before they were wiped out.

### (Examples 5 to 8 of after the printing)

The water-insoluble resin solution was spray-applied onto the surfaces of the inorganic solid layers (after printed but before applying the makeup) of the printed articles 1 to 4 obtained in Examples 1 to 4 of after the printing in the same manner as in the cases of the makeup-applied printed articles 1' to 4' of Examples 1 to 4 of after the printing, followed by drying to thereby obtain printed articles 1" to 4".

A makeup was applied onto the above printed articles 1" to 4" by the method described in (5) above, and makeup properties were evaluated. Next, cleansing properties, too, were evaluated by the method described in (6) above. The results were as shown in Table 6. Hereinafter, the printed articles 1" to 4" after cleansed and from which the foundation has been removed but which still wear eyeshadows and rouges, are called makeup-applied printed articles 1"' to 4"'.

Further, in the same manner as in the case of the makeup-applied printed articles 1' to 1' of Examples 1 to 4 of after the printing, the water-insoluble resin solution was spray-applied onto the makeup-applied printed articles 1"' to 4"' followed by drying. The makeup materials (rouge and eyeshadow) were wiped out by using a cleansing sheet for removing cosmetics. However, the makeup materials remained firmly adhered thereto like just before they were wiped out.

### (Comparative Examples 1 and 2 of before the printing)

Ink-jet printing papers *α* (photo matte paper) and *β* (glossy paper) were measured for their arithmetic mean roughness (Ra), mean length (RSm) of elements and scratch hardness by the methods described in (1) and (2) above. The results were as shown in Table 3.

**Table 3**

| Comparative Examples of before the printing | Ink-jet printing paper | Surface quality | Arithmetic mean roughness Ra (µm) | Mean length of elements RSm (µm) |
|---|---|---|---|---|
| 1 | α | matte | 2.3 | 65 |
| 2 | β | glossy | 0.2 | 303 |

### (Comparative Examples 1 and 2 of after the printing)

Images were printed on the ink-jet printing papers *α* and *β* by the method described in (4) above, a makeup was applied thereon by the method of (5) above, and makeup properties were evaluated. Further, the cleansing properties were evaluated by the method of (6) above. The results were as shown in Table 6.

When the ink-jet printing paper *α* was used, the paper has swollen with the water in the cleansing agent when the foundation was wiped with the cleansing agent. Namely, the foundation has infiltrated together with the cleansing agent into the paper, and could not be easily wiped out.

When the ink-jet printing paper *β* was used, the surface was so smooth that it was difficult to adhere or to uniformly apply the makeup materials.

### (Comparative Examples 3 and 4 of before the printing)

Fiber sheets X and Y were obtained according to a method of producing a printing sheet described in the WO2015/186583, paragraph [0077], under the conditions described in Table 4 below. The treating conditions with the hot calender in this case consisted of a treating speed of 25 m/min. and a linear pressure of 140 N/mm.

Total numbers of the dents in the fiber sheets per a unit area and area ratios of the dents were measured by the method of (3) above. The results were as shown in Table 4.

**Table 4**

| Comparative Examples of before the printing | Fiber sheet | Nonwoven fabric | Heating temperature (°C) | Mean thickness (mm) | Total number of dents per mm² | Area ratio of dents (%) |
|---|---|---|---|---|---|---|
| 3 | X | A | 125 | 0.10 | 140 | 26 |
| 4 | Y | A | 135 | 0.09 | 120 | 13 |

Next, by using the fiber sheets X and Y, there were obtained printing sheets X and Y through the same operation as that of Examples 1 and 2 of before the printing. The printing sheets X and Y were measured for their arithmetic mean roughness (Ra), mean length (RSm) of elements and scratch hardness by the methods of (1) and (2) above. The results were as shown in Table 5.

The fiber sheets, in this case, acquired high linear pressures and became dense in the direction of cross section permitting the aqueous slurry to infiltrate therein only little. When the fiber sheets were removed, therefore, the printing sheets exhibited small arithmetic mean roughness (Ra) from which, therefore, the printing sheet contemplated by the present invention could not be obtained.

**Table 5**

| Comparative Examples of before the printing | Printing sheet | Fiber sheet | Thickness of inorganic solid layer (mm) | Arithmetic mean roughness Ra (µm) | Mean length of elements RSm (µm) | Scratch hardness | Residual fiber |
|---|---|---|---|---|---|---|---|
| 3 | X | X | 0.14 | 3.0 | 205 | 3H | no |
| 4 | Y | Y | 0.15 | 2.1 | 289 | 3H | no |

### (Comparative Examples 3 and 4 of after the printing)

Images were printed on the printing sheets X and Y by the method described in (4) above, a makeup was applied thereon by the method of (5) above, and makeup properties were evaluated. Further, the cleansing properties were evaluated by the method of (6) above. The results were as shown in Table 6.

The printing sheets X and Y possessed smoother surfaces than those of the printing sheets 1 to 4. Locally, therefore, the makeup materials could not be adhered or could not be evenly applied thereon.

**Table 6**

| | Printing sheet | Structure of lamination | Evaluation of makeup properties | | | Evaluation of cleansing properties |
|---|---|---|---|---|---|---|
| | | | Foundation | Eyeshadow | Rouge | |
| Example 1 of after print | 1 | Printing sheet /printed image /makeup layer | excellent | good | good | acceptable |
| Example 2 of after print | 2 | | excellent | good | good | acceptable |
| Example 3 of after print | 3 | | excellent | good | good | acceptable |
| Example 4 of after print | 4 | | excellent | good | good | acceptable |
| Example 5 of after print | 1 | Printing sheet /printed image /protection layer /makeup layer | excellent | excellent | excellent | good |
| Example 6 of after print | 2 | | excellent | excellent | excellent | good |
| Example 7 of after print | 3 | | excellent | excellent | excellent | good |
| Example 8 of after print | 4 | | excellent | excellent | excellent | good |
| Comp. Ex. 1 of after print | α | ink-jet printing paper /printed image /makeup layer | acceptable | acceptable | acceptable | not acceptable |
| Comp. Ex. 2 of after print | β | | not acceptable | not acceptable | acceptable | acceptable |
| Comp. Ex. 3 of after print | X | Printing sheet /printed image /makeup layer | acceptable | acceptable | acceptable | good |
| Comp. Ex. 4 of after print | Y | | acceptable | acceptable | acceptable | good |

| | | | | | | |
|---|---|---|---|---|---|---|
| α: ink-jet printing paper α, β: ink-jet printing paper β | | | | | | |

### Description of Reference Numerals:

1: printing sheet
3: base sheet
5: inorganic solid layer
7: fiber sheet
9: printed image
10: printed article
11: makeup layer
13: protection layer
20: makeup-applied printed article

## Claims

1. A printing sheet including a base sheet and an inorganic solid layer provided on the base sheet,
a surface of the inorganic solid layer having a scratch hardness of not less than H as measured by the pencil hardness test specified under the JIS K 5600-5-4 and, further,
the surface of the inorganic solid layer being a rough surface having an arithmetic mean roughness (Ra) specified under the JIS B 0601-2001 of 4 to 10 *µ*m and a mean length (RSm) of elements specified under the JIS B 0601-2001 of 50 to 150 *µ*m.

2. A printed article having an image printed on the inorganic solid layer of the printing sheet of claim 1.

3. A makeup-applied printed article having a makeup layer formed on the image printed on the printed article of claim 2.

4. The makeup-applied printed article according to claim 3, wherein the printed image is an ink-jet printed image of a portrait photograph.

5. A method of producing a makeup-applied printed article by printing an image on the inorganic solid layer of the printing sheet of claim 1, and applying a makeup on the printed image by using makeup materials.

6. The method of producing the makeup-applied printed article according to claim 5, wherein the image is an ink-jet-printed image of a portrait photograph.
